# DEMANDE DE BREVET EUROPEEN

(11) **EP 1 508 282 A1**
(43) Date de publication de la demande: **23.02.2005**
(21) Numéro de dépôt: 04405518.4
(22) Date de dépôt: 19.08.2004
(51) Int. Cl.: A23L 2/02, A23L 2/52, A23L 2/68

(54) **Boisson aux jus de fruits lactofermentés**

(30) Priorité: 20.08.2003 CH 141903
(71) Demandeur: Fondation The Ark, 1950 Sion (CH)
(72) Inventeur: Wuest, Bernard, 1752 Villars s/Glane (CH); Decosterd, Sébastien, 1964 Chateauneuf (CH); Bocquel, Dimitri, 1941 Vollèges (CH); Nicolay, Laurence, 1965 Savièse (CH)
(74) Mandataire: Patentanwälte Breiter + Wiedmer AG

(57) **Abrégé**

Une boisson rafraîchissante issue de jus ou de concentrés de jus de fruits fermentés, avec de préférence des lactobacilles ou en combinaison symbiotique avec des streptocoques, a un pH plus petit qu'environ 3.5 après la fermentation. Les jus ou les concentrés de jus de fruits sont fermentés à partir d'un pH compris entre 3.8 et 6.6. Le jus ou les concentrés de jus sont obtenus de préférence à partir de raisin, de pommes ou de poires.

## Description

La présente invention concerne un procédé de production d'une boisson rafraîchissante à base de jus ou de concentrés de jus de fruits.

La fermentation de fruits et légumes sous forme de jus, purées ou morceaux, de préférence par des lactobacilles, est traditionnellement effectuée pour augmenter la durabilité des produits selon le principe de la biopréservation (Soomro et al. : Role of lactic acid bacteria (LAB) in food preservation and human health - a review, in Pakistan Journal of Nutrition 1: 20 - 24, 2002). Des fermentations lactiques de fruits tropicaux (Runge et al. : Screening of lactic acid bacteria for biological acidification of tropical fruit juices, in Fruit processing, 7, 279 - 285, 1996) et de jus de raisins (Niwa et al. : Milchsäuregärung von Fruchtsäften mit Lactobacillen, in Monatsschrift für Brauwissenshaft, 9, 373 - 377, 1987) permettent de fabriquer des boissons acidulées de goût agréable, respectivement de goût de vin.

Le brevet DE 1287379 décrit une méthode de fermentation des jus ou purées de fruits permettant la formation d'acide lactique L(+) dans une proportion d'au moins 75% en utilisant des souches de lactobacilles choisies et une limite inférieure du pH de 4 pour obtenir de bonnes propriétés organoleptiques.

Le brevet US 4702922 décrit une méthode de fermentation de jus fruits contenant une proportion d'acide lactique L(+) d'un moins 95%, avec un pH des produits de départ et du produit final inférieur à 3.7, de préférence inférieur à 3.5.

Le brevet CH 632137 décrit des jus de fruits fermentés sans sucre.

Le brevet DE 1191672 décrit des jus de fruits et des vins dont le goût est amélioré grâce à une fermentation de l'acide malique, diminuant l'acidité.

Le brevet US 2647058 décrit des jus de fruits fermentés dont l'acidité est augmentée et le contenu en sucre diminué.

La demande de brevet publiée WO 93/20180 décrit l'utilisation de souches de Leuconostoc et d'autres souches, dont *Lactobacillus plantarum* pour la fermentation malo-lactique du vin et/ou du jus de raisin par inoculation directe effectuée à un pH d'environ 3.2 et à une température de 12 à 25°C, en présence ou en l'absence d'alcool. Une légère augmentation du pH est observée. Le moût contenant des levures naturellement ou après adjonction, le produit fermenté est du vin.

*Lactobacillus plantarum* (par exemple Vinoflora^{R} plantarum™ de la firme Chr. Hansen) est utilisé en oenologie pour augmenter ou amorcer la fermentation malo-lactique du vin avant ou simultanément avec la fermentation alcoolique. Cette fermentation diminue le caractère acide du vin en raison de la transformation de l'acide malique présent dans le moût en acide lactique.

La présente invention a pour objectif la fermentation lactique de jus de fruits ou de concentrés de jus de fruits d'acidité relativement élevée pour obtenir des boissons rafraîchissantes suffisamment acides pour une bonne conservation, avec une amélioration du goût, par exemple en raison de la production d'acide lactique et de la fermentation d'acides organiques.

L'objectif est atteint selon l'invention en ce que les jus ou les concentrés de jus de fruits sont fermentés à partir d'un pH compris entre 3.8 et 6.6 jusqu'à ce que le pH du produit fermenté soit plus petit qu'environ 3.5.

Les boissons fermentées de préférence par des lactobacilles contiennent de l'acide lactique en quantité variable, présentent une acidité variable influençant leur aptitude à la conservation. L'acide lactique formé est sous les formes L(+) et L(-), dans des proportions variables selon la nature des lactobacilles, la composition des jus et les paramètres de conduite de la fermentation, et également de la formulation de la boisson. La fermentation lactique s'accompagne de la formation de différentes vitamines et, selon la nature des lactobacilles, la composition du jus et les paramètres de conduite du processus de fermentation, s'accompagne d'améliorations ou d'altérations du goût. La présente invention permet de produire des boissons rafraîchissantes à base de jus ou de concentré de jus de fruits, par exemple du raisin, fermentées par des lactobacilles, et d'une qualité sensorielle supérieure à la qualité sensorielle du jus soumis à la fermentation, grâce à la standardisation de l'acidité du jus, exprimée par son pH, avant ladite fermentation, et à la conduite du processus de fermentation.

Le pH initial de jus de fruits, par exemple le jus de raisin, est naturellement bas et inférieur à 3.6. La concentration d'un jus de raisin est accompagnée de la précipitation de l'acide tartrique, qui doit être éliminé du concentré, par exemple par décantation ou filtration ou toute autre méthode adéquate. Selon la présente invention, un concentré de jus de raisin, dilué par exemple à 5 - 20°Brix, présente un pH plus élevé que celui du jus dont il est issu, dilué également à 5 - 20°Brix. D'une façon surprenante, la fermentation d'un tel concentré, dilué à environ 10°Brix, par des lactobacilles choisis pour fermenter les acides organiques, par exemple l'acide malique, et les sucres naturellement présents dans les fruits, principalement le glucose et le fructose, permet d'obtenir un jus fermenté acidulé dont les qualités sensorielles sont améliorées, et avec une durée de fermentation n'excédant pas 36 heures, de préférence 12 à 36 heures. La standardisation du pH initial d'un jus de fruits très acide à environ 4 permet également d'obtenir le même effet.

Avant la fermentation du jus de fruits ou du concentré de jus de fruits dilué avec de l'eau, le pH de départ du jus est ajusté à une valeur de 3.8 à 6.6, de préférence de 3.8 à 4.3. Après l'ajout d'environ 10⁷-10⁸ u.f.c. (unités formant des colonies) de lactobacilles par ml, la fermentation est accompagnée d'abord d'une augmentation du pH d'au moins environ 0.1 unité, puis d'une diminution du pH d'au moins environ 0.4 unité avec des valeurs maximales d'environ 3.5. La concentration de fermentation d'un jus concentré par dilution peut être ajustée à des valeurs Brix différentes, selon le degré de sucrosité désiré dans le produit final. L'acide malique, par exemple, est fermenté au début de la fermentation en 3-10 heures, provoquant une augmentation du pH. Le glucose et le fructose présents sont également fermentés, ce qui diminue leur concentration. Le pH diminue rapidement après avoir atteint sa valeur maximale. La concentration en acide lactique augmente, de même que la biomasse, augmentée d'un facteur d'environ 10. A la fin de la fermentation, le pH se stabilise et la croissance des germes ralentit ou s'arrête. Une fois la fermentation terminée, les germes sont séparés de la boisson par centrifugation, filtration ou ultrafiltration tangentielle. Le goût du produit final se caractérise par sa note lactique et sa fraîcheur. Les germes séparés peuvent être utilisés pour fermenter un nouveau lot.

Le pH initial, généralement plus élevé que le pH du jus, est important pour la fermentation. Lors de la fabrication de concentré à environ 65°Brix, certains acides, en particulier l'acide tartrique, sont susceptibles de précipiter. Après clarification, ces acides sont éliminés. Le pH du concentré, voisin de 3.4, augmente à un pH d'environ 4 après dilution à environ10°Brix. Le pH d'un jus de départ avant l'inoculation peut donc être corrigé selon les besoins, en ajoutant par exemple de l'hydroxyde de calcium alimentaire.

La fermentation est effectuée de préférence avec une souche de lactobacilles, par exemple *Lactobacillus plantarum* ou *Lactobacillus ramnosus*, ou avec toute autre espèce adéquate ou en combinaison symbiotique avec un *Streptococcus thermophilus,* ajoutée à un jus de fruits ou à un concentré de jus de fruits, par exemple de raisin, dilué de façon appropriée et de pH compris entre 3.8 et 6.6, de préférence entre 3.8 et 4.3, dans des conditions de température et de concentration en germes permettant la fermentation de l'acide malique en acide lactique avec augmentation du pH, puis une acidification à pH 3.3-3.5 par conversion des sucres de fruits en acide lactique en moins d'environ 36 heures, de préférence en environ 12 heures. Le produit ainsi obtenu, filtré pour enlever les germes lactiques, peut être pasteurisé et conditionné tel quel et se caractérise par un goût spécifique agréable et rafraîchissant. Ledit produit, filtré ou non, peut être formulé en boissons de goûts et compositions variées par ajout d'autres jus de fruits, ou par ajout d'extraits de plantes obtenus par infusion, percolation ou autres techniques, ou par ajout d'arômes ou de tout autre ingrédient approprié, par exemple du gaz carbonique. La fermentation peut être conduite en présence de plantes aromatiques ou d'extraits de plantes aromatiques traitées de façon à ne pas contenir de germes susceptibles de concurrencer les germes lactiques utilisés.

Le jus ou le concentré de jus, par exemple de raisin, doit être exempt de levures pour éviter une fermentation alcoolique simultanée, ce qui est obtenu par exemple par un traitement thermique avant la fermentation.

La fermentation selon l'invention est de préférence biphasique, avec d'abord une augmentation du pH de 0.1 à 0.3 unité, suivie d'une acidification se traduisant par une diminution de pH de 0.4-0.9 unité. Ladite fermentation, obtenue de préférence avec des souches de bactéries utilisées spécifiquement avant ou après la fermentation alcoolique pour éliminer l'acide malique, par exemple *Lactobacillus plantarum*, permet la production d'une boisson fermentée sans alcool, stable et de goût agréable à partir de jus fruits, par exemple de raisin ou de pommes, ou de concentrés ajustés à la concentration désirée, en moins d'environ 36 heures et à une température d'environ 30°C, et avec une concentration initiale en germes d'environ 10⁷ à 10⁸ lactobacilles par ml. L'ensemencement peut être effectué avec une souche lyophilisée et de manière directe, c'est-à-dire en dispersant le lyophilisat dans le jus ou le concentré dilué, ou après avoir procédé à une revitalisation par culture dans un milieu adéquat ou dans de l'eau pendant environ 30 minutes. Selon la concentration initiale en sucre, le contenu d'acide lactique est compris entre par exemple 3 et 10 g/l. La concentration en sucre naturel ou ajouté varie en fonction de la sucrosité désirée, par exemple entre 6 et 20 %. Le procédé de fabrication peut être adapté à d'autres jus de fruits contenant de l'acide malique et/ou tartrique et des sucres simples, en choisissant les concentrations, températures et durées de fermentation adéquates. Le procédé de fermentation peut également être conduit en présence de plantes aromatiques ou d'extraits de plantes aromatiques rendus de préférence exempts de germes susceptibles de se reproduire. Le procédé de fabrication peut comprendre une formulation afin d'obtenir des boissons de goûts et compositions variées, par ajout d'autres jus de fruits, ou par ajout d'extraits de plantes obtenus par infusion, percolation ou autres techniques, ou par ajout d'arômes ou de tout autre ingrédient approprié, par exemple du gaz carbonique.

### Exemples

Les exemples ci-dessous illustrent le procédé de fabrication permettant d'obtenir une boisson rafraîchissante au goût lactique agréable avec du jus ou du concentré de jus de fruits :
1. Fermentation d'un jus de raisin avec différentes souches de germes lactiques
Un jus de raisin est dilué avec de l'eau à environ 15°Brix. Des portions de1 litre sont introduites dans des bouteilles en polyéthylène préalablement stérilisées, et inoculées séparément avec différentes souches de lactobacilles (cultures pures de laboratoire). Le pH est mesuré avant la fermentation. Après 1 et 2 jours d'incubation à 30°C ou 37°C, le pH est mesuré et les propriétés sensorielles des jus fermentés évaluées.

**Tableau 1 :**

| Fermentation d'un jus de raisin avec différentes souches de germes lactiques | | | | | |
|---|---|---|---|---|---|
| Souche | inoculation | pH initial | pH 1 après jour | pH après 2 jours | Propriétés sensorielles |
| *Lactobacillus bulgaricus* | Aliquote après revitalisation | 4.2 | 4.0 | 4.2 | Goût peu modifié |
| *Lactobacillus plantarum* | Aliquote après revitalisation | 4.2 | 3.8 | 3.5 | Goût lactique caractéristique |
| *Lactobacillus brevis* | Aliquote après revitalisation | 4.2 | 4.0 | 4.1 | Goût peu modifié |
| *Lactobacillus casei* | Aliquote après revitalisation | 4.2 | 4.0 | 3.9 | Goût peu modifié |
| Le goût le plus agréable et la meilleure acidification sont obtenus avec *Lactobacillus plantarum*. | | | | | |

2. Fermentation d'un concentré de jus de raisin dilué à différentes concentrations
Un concentré de jus de raisin est dilué avec de l'eau à respectivement environ 5°Brix, 10°Brix, 15°Brix et 20°Brix. Des portions de 1 litre sont introduites dans des bouteilles en polyéthylène préalablement stérilisées, et inoculées séparément avec différentes souches de lactobacilles revitalisées dans un milieu de culture, puis centrifugées et suspendues dans du jus de raisin. Le pH est mesuré avant la fermentation. Après 1 et 2 jours d'incubation à 30°C, le pH est mesuré et les propriétés sensorielles des jus fermentés évaluées.

**Tableau 2 :**

| Fermentation d'un concentré de jus de raisin dilué à différentes concentrations : | | | | | | |
|---|---|---|---|---|---|---|
| Concentration du jus de raisin | inoculation | pH initial | pH 1 après 1 jour | pH après 2 jours | pH après 3 jours | Propriétés sensorielles |
| 5°Brix | Aliquote après revitalisation | 4.6 | 4.0 | 3.5 | 3.3 | Goût lactique caractéristique Peu sucré |
| 10°Brix | Aliquote après revitalisation | 4.3 | 3.9 | 3.6 | 3.5 | Goût lactique caractéristique |
| 15°Brix | Aliquote après revitalisation | 4.2 | 4.0 | 3.5 | 3.4 | Goût lactique caractéristique |
| 20°Brix | Aliquote après revitalisation | 4.2 | 4.1 | 3.7 | 3.5 | Goût lactique caractéristique Très sucré |
| Avec les conditions de revitalisation utilisées, une acidification importante a lieu en 2 jours de fermentation jusqu'à une concentration de 20°Brix. | | | | | | |

3. Fermentation d'un jus de raisin en fermenteur
Un jus de raisin est dilué avec de l'eau à environ 10°Brix, désacidifié avec du carbonate de calcium jusqu'à un pH d'environ 4.0 et pasteurisé. 10 litres sont introduits dans un fermenteur de 25 litres préalablement stérilisé, et inoculés avec 5x10⁷ u.f.c. par ml de *Lactobacillus plantarum* (souche lyophilisée revitalisé 30 minutes dans de l'eau). Le pH est mesuré au cours de la fermentation. Après 22 heures d'incubation à 30°C, le jus fermenté est filtré pour éloigner les lactobacilles et dégusté.
Le pH diminue d'environ 4.95 à environ 3.4, après une augmentation à maximum environ 4.1 après environ 8 heures de fermentation. La boisson obtenue est rafraîchissante et de goût agréable.
4. Fermentation d'un jus de pommes
Un jus de pommes est dilué avec de l'eau à 10°Brix. 1 litre est introduit dans un récipient préalablement stérilisé et inoculé avec 5x10⁷ u.f.c. par ml de *Lactobacillus plantarum*. Le pH est mesuré au cours de la fermentation. Après 24 heures d'incubation à 30°C, le jus fermenté est filtré pour éloigner les lactobacilles et dégusté.
Le pH diminue d'environ 4.0 à environ 3.5. La boisson obtenue est rafraîchissante et de goût agréable.
5. Fermentation d'un concentré de raisin en pilote et formulation
Un concentré de jus de raisin est dilué avec de l'eau à 10°Brix. 100 litres de jus de raisin dilué à environ 10°Brix, respectivement 200 litres de concentré de jus de raisin dilué à environ 10°Brix sont introduits dans un fermenteur de 250 litres préalablement thermisé à la vapeur, et inoculés avec 10⁸ u.f.c. par ml de *Lactobacillus plantarum*. Le pH est mesuré au cours de la fermentation. Après 22 heures, respectivement 26 heures d'incubation à 30°C, les germes lactiques sont éliminés par filtration tangentielle. Le pH diminue d'environ 4.1, respectivement environ 3.95, à environ 3.5. La boisson obtenue est rafraîchissante et de goût agréable. Comparés à du jus de raisin dilué à 10°Brix, l'arôme et le goût typiquement lactique sont prononcés.
Des portions de jus fermenté sont ensuite additionnées d'infusions de plantes aromatiques (menthe citronnée : 4g/l, thym citronné : 3g/l) et dégustées.
Les boissons formulées par addition d'infusions de plantes sont rafraîchissantes et de goût très agréable.
6. Fermentation d'un jus de raisin en pilote
A partir d'un jus de raisin à pH 3.5, on remonte le pH de 3.2 unités puis on inocule avec des lactobacilles et des streptocoques et on incube à 45°C. L'acidification par ces microorganismes fait chuter le pH de 3.2 unités endéans environ 12 heures. La boisson obtenue est rafraîchissante et de goût agréable.

## Revendications

1. Procédé de production d'une boisson rafraîchissante à base de jus ou de concentrés de jus de fruits, **caractérisé en ce que** le jus ou le concentré de jus de fruits sont fermentés à partir d'un pH compris entre 3.8 et 6.6 jusqu'à ce que le pH du produit fermenté soit plus petit qu'environ 3.5.

2. Procédé selon la revendication 1, **caractérisé en ce que** le pH est augmenté d'au moins environ 0.1 unité et puis diminué d'au moins environ 0.4 unité.

3. Procédé selon la revendication 1 ou 2, **caractérisé en ce que** la température de la fermentation est maintenue entre 30°C à 56°C, de préférence à environ 45°C, et la durée de fermentation est de 10 à 36 heures, de préférence environ 12 heures.

4. Procédé selon une des revendications 1 à 3, **caractérisé en ce que** des ingrédients, de préférence des plantes aromatiques ou des extraits de plantes aromatiques, des arômes ou du gaz carbonique sont ajoutés avant le remplissage.

5. Procédé selon une des revendications 1 à 4, **caractérisé en ce que** la fermentation est effectuée en présence de plantes aromatiques, d'extraits ou d'arômes de plantes aromatiques.

6. Procédé selon une des revendications 1 à 5, **caractérisé en ce que** 10⁵ - 10⁸ u.f.c. par ml de lactobacilles ou d'une combinaison symbiotique avec des streptocoques sont ajoutés.

7. Procédé selon une des revendications 1 à 6, **caractérisé en ce que** la fermentation est effectuée avec un jus ou un concentré de jus de fruits dilué à 5-20°Brix, de préférence à 10-15° Brix.

8. Procédé selon une des revendications 1 à 7, **caractérisé en ce que** le jus ou le concentré de jus de fruits est obtenu à partir de raisin, de pommes ou de poires.

9. Procédé selon une des revendications 1 à 8, **caractérisé en ce que** le jus ou le concentré de jus de fruits sont fermentés à partir d'un pH compris en 3.8 et 4.3.

10. Procédé selon la revendication 9, **caractérisé en ce que** la fermentation est biphasique, de préférence avec d'abord une augmentation de pH de 0.1 à 0.3 unité, suivie d'une diminution de 0.4 à 0.9 unité.
